(19) Europäisches Patentamt
European Patent Office
Office européen des brevets

(11) **EP 4 575 946 A1**

(12) **EUROPEAN PATENT APPLICATION**

(43) Date of publication:
**25.06.2025   Bulletin 2025/26**

(21) Application number: 23218280.8

(22) Date of filing: **19.12.2023**

(51) International Patent Classification (IPC):
**G06Q 10/0631** (2023.01)    **G06F 9/50** (2006.01)
**H04L 61/00** (2022.01)    **H04L 67/12** (2022.01)
**H04W 4/02** (2018.01)    **G06F 11/34** (2006.01)

(52) Cooperative Patent Classification (CPC):
**G06Q 10/06312; H04L 67/12;** G06F 9/5066;
G06F 11/3409; H04L 67/63; H04W 4/02; H04W 4/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Cumulocity GmbH
40211 Düsseldorf (DE)**

(72) Inventors:
• **Hazarika, Rinku
  560035 Bangalore (IN)**
• **Narayana, Anireekshita
  560097 Bangalore (IN)**
• **Channagoudra, Prakashgouda
  560035 Bangalore (IN)**

(74) Representative: **Sonnenberg Harrison
Partnerschaft mbB
Herzogspitalstraße 10a
80331 München (DE)**

(54) **A METHOD FOR IMPLEMENTING A RANKING SYSTEM FOR SOCIAL NETWORKING OF INTERNET OF THINGS (IOT) DEVICES**

(57)    A method for implementing a ranking system for social networking of Internet of Things (IoT) devices, the method comprising: deploying (S1) a prediction agent in an IoT platform of the ranking system; predicting (S2), by the prediction agent, a status of at least one IoT device to evaluate a capability of the at least one IoT device to complete an assigned task; applying (S3) the ranking system to determine other IoT devices for replacement of the at least one capability-predicted IoT device based on at least one ranking criterion; and selecting (S4) the one of the other IoT devices for connection with the at least one capability-predicted IoT device to complete the assigned task of the capability-predicted IoT device.

Fig. 1

EP 4 575 946 A1

## Description

FIELD OF TECHNOLOGY

The present invention relates to a method for implementing a ranking system for social networking of Internet of Things (IoT) devices. The present invention also relates to a device for implementing a ranking system for social networking of Internet of Things (IoT) devices. Also, the invention relates to a computer program as well as to a computer-readable data carrier with program code of a computer program.

BACKGROUND

IoT devices form part of human's day-to-day activity. Thereby, IoT devices help humans to better manage and simplify certain work steps and/or tasks. Similar to humans making relationships through social platforms to gain knowledge, offer and/or seek help, for entertainment etc, if an IoT devices mimic these behaviours then the service that humans get from these socially engaged IoT devices would be of a greater extent. This is based on the fact that there is scientific evidence that a large number of individuals tied in a social network can provide far more accurate answers to complex problems than a single individual.

Butt et al., "Social Internet of Vehicles: Architecture and Enabling Technologies", for example, demonstrates how social IoT devices, and social relationship types can be used to manage smart vehicles to avoid traffic jams and/or warn about accidents, and/or weather conditions, etc. However, it is not shown how such a general concept may be leveraged in an industrial scenario.

Khelloufi et al., "A Social Relationships Based Service Recommendation System For SIoT Devices" demonstrates how social relationships between devices can be organized centrally using a graph-based system to automatically find the best service recommendation. However, these are recommendations to users and the devices are private devices like smartphones.

SUMMARY

Against this background, it is an object of the present invention to provide an improved method and/or device for implementing a ranking system for social networking of Internet of Things (IoT) devices.

The object is attained by a method for implementing a ranking system for social networking of Internet of Things (IoT) devices having the features of claim 1. Also, the object is attained by a device for implementing a ranking system for social networking of Internet of Things (IoT) devices having the features of claim 11.

Further aspects of the present disclosure are the subject matter of the dependent claims. Any and all combinations of at least two features disclosed in the description, the claims, and/or the figures fall within the scope of the present disclosure. Naturally, the explanations given in connection with the training method equivalently relate to the method and/or device for healing and/or completing and/or accuracy-increasing of sensor data and vice versa without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

In accordance with a first aspect, a, preferably computer-implemented, method for implementing a ranking system for social networking of Internet of Things (IoT) devices is provided. The method comprises deploying a prediction agent, preferably as a microservice, in an IoT platform of the ranking system; predicting, by the prediction agent, a status, preferably an upfront status, of at least one IoT device to evaluate a capability of the at least one IoT device to complete an assigned task, preferably based on a remaining useful life (RUL) of the at least one IoT device; applying the preferably weightage-based ranking system to determine other IoT devices for replacement of the at least one capability-predicted IoT device based on at least one ranking criterion; and selecting one of the other IoT devices for connection with the at least one capability-predicted IoT device to complete the assigned task of the capability-predicted IoT device.

The above details a method for creating and implementing a ranking system for the social networking of Internet of Things (IoT) devices. Let's break down its key features:

The presented method is designed to be implemented through a computer system, indicating its reliance on software, algorithms, and digital processing. The primary focus is to establish a ranking system within a social networking framework specifically for IoT devices. This implies a system where IoT devices are assessed and/or ranked based on certain criteria within a network. The method may involve deploying a prediction agent, preferably in the form of a microservice, within an IoT platform that is part of the ranking system. A microservice may be a lightweight, independent service that performs a specific function. The prediction agent may be tasked with predicting the status of IoT devices, with a preference for determining their "upfront status", preferably referring to an initial assessment of the device's condition and/or capabilities. The prediction focuses on evaluating the capability of IoT devices to complete an assigned task, with a particular emphasis on their Remaining Useful Life (RLTL), which may refer to the expected operational lifespan left in the device. Preferably, the method may apply a ranking system that is likely to be based on the importance and/or weightage of different factors. The IoT system preferably uses at least one criterion for ranking IoT devices. This criterion is used to ascertain the order in which IoT devices are ranked, based on their predicted capabilities and/or possibly other relevant factors. The method is able to identify other IoT devices that may replace a device whose capability has been predicted. This means the system determines which other IoT devices in the network can take over the task if the primary device is deemed incapable. After identifying potential replacements, the method involves selecting one of these IoT devices to pair with the initially evaluated device. The replacement is chosen to complete the task initially assigned to the capability-predicted device.

The presented method relates to the field of IoT and enables IoT devices to make social relationships among themselves to offer better service to an external world.

Preferably, the remaining useful life (RUL) comprises at least one of a remaining energy stored in a respective IoT device (e.g., a battery life of the respective IoT device), remaining process materials (e.g., paint etc. of the respective IoT device), wear and tear (e.g., abrasive wear on tools of the respective IoT device), and a remaining work to be done by the respective IoT device.

By means of the prediction agent which may be deployed as a microservice in the platform, it may be possible to upfront predict the status of IoT devices to determine if a certain or several IoT devices may complete an assigned work or task. This helps to predict failure early. Also, it enables the application of a preferably weightage-based ranking system to get the best replacement of an IoT device, which is determined to not be able to complete a designated work or task, to continue the work of said IoT device with another replacement IoT device.

In one aspect, the at least one ranking criterion defines one or more relationship types selected from the group comprising a co-location relationship, a co-owner relationship, a co-work relationship, a co-type relationship, and a co-protocol relationship. In the case of applying the ranking-based system, a colocation score has the highest priority and/or may override other relevant scores.

The ranking criterion (or criteria) is based on one or more types of relationships between entities (likely IoT devices). These relationship types are selected from a predefined group as listed above. It shall be understood that also other relationship types may be applied without having to be listed explicitly at this point. It is specified that in the application of the ranking system, the co-location score (the ranking based on the physical proximity or location of the devices) is given the highest priority. This means that when determining the ranking of devices, their physical proximity to each other may be considered the most important factor. Additionally, the co-location score may override other relevant scores. This suggests that if a device scores high in terms of co-location, it may rank higher overall, even if it scores lower in other relationship-based criteria. Thus, the relationships between entities, particularly their physical proximity, play a crucial role in determining their ranking.

In a further aspect, the method comprises prioritizing the at least one ranking criterion based on at least one priority criterion, wherein the priority criterion is dynamically adjustable within the ranking system in accordance with at least one of a connection context, a connection situation and a connection solution. The step of prioritizing is preferably performed after the step of applying the ranking system. To exemplify, it may happen that IoT devices may establish more than one of the before-mentioned type of relationship among themselves. Thus, it may be important to decide which relationship type (of all possible relationship types) has the highest priority, so that when a certain service and/or work and/or task is needed or demanded, IoT device pairs having the highest priority may be chosen to rescue and/or replace the IoT device of the pair that is not able to complete an assigned work or task. Thereby, a seamless service of the IoT devices can be offered or provided. Such a chosen pair of IoT devices may comprise the IoT device that is not able to complete an assigned work or task and another IoT device that is used as a replacement of the IoT device that is not able to complete an assigned work or task to take over the task or work in order to compensate said malfunction. In order to select the best pairing, a priority ranking among IoT device pairs is introduced. It is important to state that these priority rankings may not be fixed in their nature. Thus, the priority ranking may change with the context and/or situation and/or solution. Therefore, preferably, certain priority is assigned to different relationship types. Furthermore, such a priority selection may be implemented to be part of the IoT platform so that a solution builder can change the priorities accordingly. Furthermore, dynamic-based ranking may be implemented to avoid fixed ranks. Such a dynamic based ranking system is explained in detail in the detailed description of the drawing at the end of this specification, wherein reference to said section is made at this point. As a default example for a priority ranking, the IoT system may have given priority to different relationship types as follows:

| | |
|---|---|
| co-work: | Ranked 1 (Highest priority) |
| co-protocol: | Ranked 2 |
| co-type: | Ranked 3 |

(continued)

| | |
|---|---|
| co-location: | Ranked 4 |
| co-owner: | Ranked 5 (Lowest priority) |

In a further aspect, the method further comprises enabling a solution builder to dynamically adjust the at least one priority criterion and/or a priority within the ranking system. The method includes the participation of a 'solution builder', which is likely a role or a component within the system. This could be a person, team, or a software module responsible for designing, configuring, or managing the ranking system. The solution builder may be enabled to make dynamic adjustments. This means it can alter and/or modify the IoT system's settings and/or parameters in real-time or as needed, without requiring significant downtime or restructuring of the entire system. The method allows the solution builder to change the 'at least one priority criterion'. These criteria may be the standards or rules based on which the ranking is determined within the system. Adjusting these criteria may refer to the solution builder can redefine what factors are considered important in the ranking process. Besides adjusting the criteria themselves, the solution builder can also alter the priority levels within the existing ranking system. This could involve changing how different criteria are weighted against each other or reordering the importance of various factors that determine the overall ranking. The feature of enabling dynamic adjustments by the solution builder may imply a high degree of flexibility and customization in the ranking system. It suggests that the system may be tailored to specific needs or preferences, and can adapt to changing requirements or conditions.

In a further aspect, the co-location relationship is defined based on a geographical distance threshold. In other words, the co-location (COL) relationship is based on at least one threshold set in the IoT system, wherein IoT devices are paired if they are geographically at a distance within the at least one set threshold. In order to perform COL scoring, COL pairs of IoT devices may be determined in a way to give highest priority to the nearest ones of said pairs. For example, if Device A and Device B are at a distance of 1 meter and Device A and Device C are at a distance of 1.6 meter, then the COL score for {Device A : Device B} pair is COL-Score = 2 whereas for the {Device A : Device C} pair, the COL-Score = 1 Thereby, different methods may be used to measure the shortest distances between IoT devices. An example for such a measurement method may be DBSCAN and/or a GN(Girvan-Newman) algorithm, etc.

In a further aspect, the co-owner relationship is established when the IoT devices have the same owner. In other worlds, the co-owner (COO) relationship may express that if the IoT devices have a same or a similar owner, then they are paired with or according to a co-owner type relationship.

In a further aspect, the co-type relationship is established when the IoT devices are of the same type or brand. Thus, according to the co-type (COT) relationship, if the IoT devices are of same type and/or of the same brand, then they are paired with according to said device-type relationship.

In a further aspect, the co-protocol (COP) relationship is established when the IoT devices communicate using the same protocol. In other words, according to the co-protocol (COP) relationship, if the IoT devices can communicate using same or a similar protocol, they may be paired according to the co-protocol relationship. For example, two LORA-protocol based IoT devices may be paired according to the COP relationship. Whereas, for example, a LORA-protocol based IoT device and a SIGFOX-protocol based IoT device may not be paired as no COP relationship can be determined.

In a further aspect, the method comprises dynamically adjusting at least one weightage of the weightage-based ranking system changing and/or recalculating and/or resetting the at least one weightage of the at least one ranking criterion based on a predefined weightage set criterion, wherein the weightage-based ranking system comprises a weightage matrix, in which for each pair of determined IoT devices the weightages for the ranking criteria are summed.

In accordance with a second aspect, a device for implementing a ranking system for social networking of Internet of Things (IoT) devices is provided. The device comprises a processing unit; a memory unit; and preferably a communication interface; wherein the processing unit is configured to execute instructions stored in the memory unit to perform the presented method according to any one of its aspects.

In a further aspect, the processing unit further executes instructions to facilitate the preferably weightage-based ranking system to determine a replacement for an IoT device based on multiple relationship types.

The above focuses on an additional aspect of a method, typically within the context of a ranking system for Internet of Things (IoT) devices. Here's a breakdown of its key features:

The processing unit is involved in executing the method. Such a processing unit may be a hardware or software component within a computer system, IoT device, or network, responsible for carrying out computational tasks. The processing unit may be tasked with executing specific instructions. These instructions may be part of the method and may be designed to enable and/or facilitate the functionality of the ranking system. The system may be described as being "preferably weightage-based," indicating that the ranking of IoT devices is determined by assigning different weights or importance to various factors or criteria. A key function of the system, as facilitated by the processing unit, is to identify a suitable replacement for an IoT device. This implies a scenario where an IoT device, for some reason, needs to be replaced by another device in the network. The replacement may be determined based on multiple relationship types. These relationships could be similar to those mentioned in previous claims, such as co-location, co-owner, co-work, co-type, and co-protocol relationships. The use of multiple types indicates a comprehensive approach to assessing the suitability of potential replacement devices.

In a further aspect, the processing unit further executes instructions to dynamically alter the weightage-based ranking system, prioritizing different IoT devices based on current conditions and defined relationship types.

The processing unit may be integral to the method. This processing unit, which could be a part of a computer system, server, or embedded within an IoT device, may be responsible for carrying out computational tasks. The processing unit may be tasked with executing certain instructions. These instructions may be designed to enable or modify the functionality of the weightage-based ranking system within the IoT context. The dynamic alteration of the ranking system may refer to that the processing unit can adjust the ranking algorithm and/or parameters in real-time or as conditions change. It suggests a system capable of adapting to evolving situations without manual intervention. The ranking system in question may be based on assigning different weights or levels of importance to various factors or criteria. This approach allows for a nuanced and/or flexible ranking of IoT devices, where the significance of certain factors can vary. The method may include the capability to prioritize IoT devices differently based on the current conditions. This implies that the ranking is not static but can change depending on situational factors such as device status, environmental conditions, or network demands. The system may prioritize IoT devices also based on defined relationship types. These could be similar to previously mentioned relationships like co-location, co-owner, or co-type relationships. The use of these relationship types in determining priority indicates a comprehensive and context-aware approach to ranking. The feature of dynamically altering the ranking based on current conditions and relationship types underscores the system's adaptability and responsiveness to real-time changes within the IoT environment.

All features and/or aspects described for the method apply to the device.

Also claimed according to the invention is a computer program comprising program code to execute at least parts of the method according to the invention in one of its aspects, when the computer program is executed on a computer. In other words, according to the invention, a computer program (product) comprising instructions which, when the program is executed by a computer, cause the computer to execute the method/steps of the method according to the invention in one of its aspects.

According to the invention, a computer-readable medium comprising program code of a computer program is also proposed for executing at least parts of the method according to the invention in one of its aspects when the computer program is executed on a computer. In other words, the invention relates to a computer-readable (storage) medium comprising instructions which, when executed by a computer, cause the computer to execute the method/steps of the method according to the invention in one of its aspects.

All aspects and aspects as described above may be combined as deemed fit by the skilled person.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

BRIEF DESCRIPTION OF THE FIGURES

Further possible implementations of the invention also comprise not explicitly mentioned combinations of any features or aspects that are described above or below with respect to the exemplary aspects. In this case, a person skilled in the art will also add individual aspects as improvements or supplementations to the respective basic form of the invention.

Fig. 1 shows a flowchart of the presented method for implementing a ranking system for social networking of Internet of Things (IoT) devices;
Fig. 2 shows a plurality of devices and their potential interconnections;
Fig. 3 shows a plurality of devices and their potential interconnections with an additional device;
Fig. 4 shows a proof of concept source code for finding the pairs among the IoT devices;
Fig. 5 shows a use case of the presented method for painting a car by several robot IoT devices;
Fig. 6 shows the use case of the presented method for painting a car by several robot IoT devices;
Fig. 7 shows an IoT device selection based on relationship type ranking;
Fig. 8 shows the IoT device selection based on relationship type ranking;
Fig. 9 shows a schematic flowchart of the method according to an aspect;
Fig. 10 shows a schematic acyclic graph of IoT devices; and
Fig. 11 shows another use case of the presented method for painting a car by several robot IoT devices.

Unless indicated to the contrary, elements that are the same or functionally the same have been given the same reference signs in the figures. It should also be noted that the illustrations in the figures are not necessarily true to scale.

DETAILED DESCRIPTION

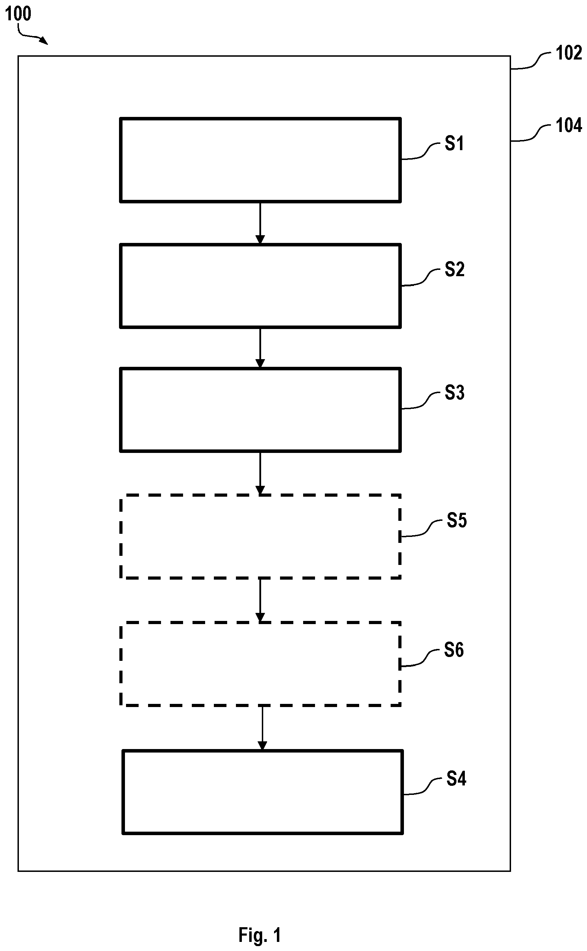

Fig. 1 shows a schematic flowchart of an aspect of the computer-implemented method for implementing a ranking system for social networking of Internet of Things (IoT) devices.

In a step S 1, there is performed deploying a prediction agent in an IoT platform of the ranking system.

In a step S2, there is performed predicting, by the prediction agent, a status of at least one IoT device to evaluate a capability of the at least one IoT device to complete an assigned task.

In a step S3, there is performed applying the ranking system to determine other IoT devices for replacement of the at least one capability-predicted IoT device based on at least one ranking criterion.

In a step S4, there is performed selecting the one of the other IoT devices for connection with the at least one capability-predicted IoT device to complete the assigned task of the capability-predicted IoT device.

In an optional step S5, there may be performed prioritizing the at least one ranking criterion based on at least one priority criterion. The priority criterion may be dynamically adjustable within the ranking system in accordance with at least one of a connection context, a connection situation and a connection solution. Step S5 may preferably be executed between step S3 and S4. As step S5 is optional, it is indicated by a box with dashed lines in Fig. 1.

In an optional step S6, there may be performed dynamically adjusting at least one weightage of the weightage-based ranking system changing and/or recalculating and/or resetting the at least one weightage of the at least one ranking criterion based on a predefined weightage set criterion, wherein the weightage-based ranking system comprises a weightage matrix, in which for each pair of determined IoT devices the weightages for the ranking criteria are summed.

The method may be executed and/or deployed on a device 100. The device 100 for implementing a ranking system for social networking of Internet of Things (IoT) devices comprises a processing unit 102 and a memory unit 104. The processing unit 102 is configured to execute instructions stored in the memory unit 104 to perform the method in any one of its aspects. In particular, the processing unit 102 is configured to execute steps S1 to S4 and optionally step S5.

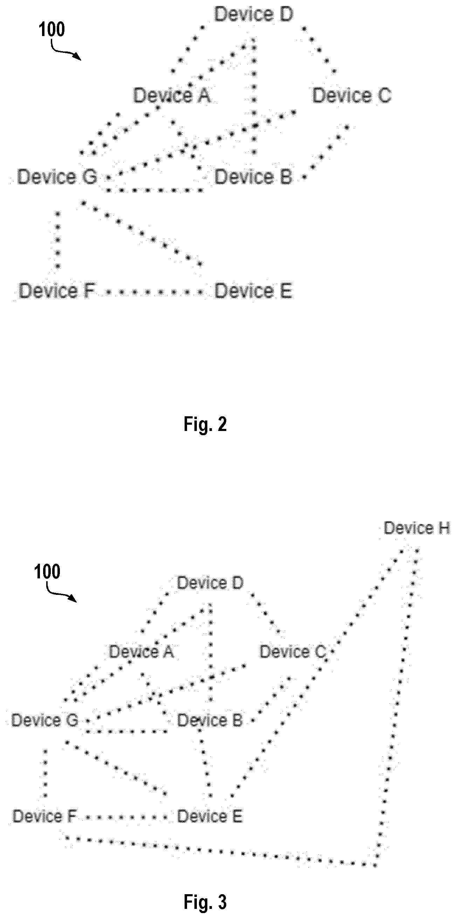

Fig. 2 shows a plurality of devices A, B, C, D, E, F, G and their potential interconnections indicated by dashed lines, respectively. Thereby, on-boarding of IoT devices may be performed on an IoT platform. A ranking-based device pairing engine code may be deployed as part of a microservice onto the IoT platform. A solution builder may pass few required details like device selection priority ranks to the engine to pick a predefined set of IoT device for seamless service execution. For example, as shown hereinafter, the IoT system may establish relationships among devices and may instruct certain IoT devices to serve a required service or task or work. The example is provided, consider that the IoT platform may already have the on-boarded IoT devices A-G. Thereby, only as an example, the IoT devices A-G and their existing attributes are shown below:

Device A-    {type: type1, location: {44 lat ,-48 lng},work-assigned :painting, protocol Modbus, owner: John}
Device B-    {type: type1, location: {42 lat ,-47 lng},work-assigned :painting, protocol Modbus, owner: John}
Device C-    {type: type1, location: {43 lat ,-48 lng},work-assigned :painting, protocol Modbus, owner: John}
Device D-    {type: type1, location: {44 lat ,-48 lng},work-assigned :painting, protocol Modbus, owner: John}
Device E-    {type: type2, location: {40 lat ,-88 lng},work-assigned :washing, protocol LORA, owner: Jolly}
Device F-    {type: type3, location: {30 lat ,-49 lng},work-assigned :printing, protocol: FieldBus, owner: Jolly}
Device G-    {type: type3, location: {31 lat ,-49 lng},work-assigned :printing, protocol: LORA, owner: John }

As shown in Fig. 2, the proposed IoT system is configured to pair the IoT devices A-G as shown in the following listing: Thereby, it has to be noted that a COL relationship is used for pairing and that the COL relationship is based on a threshold set in the IoT system, either initially or dynamically adjustable.

{Device A: Device B, relationshipTypes: [COL, COW, COO, COT, COP]}
{Device A: Device C, relationshipTypes: [COL, COW, COO, COT, COP]}
{Device A: Device D, relationshipTypes: [COL, COW, COO, COT, COP]}
{Device A: Device G, relationshipTypes: [COO]}
{Device B: Device C, relationshipTypes: [COL, COW, COO, COT, COP]}
{Device B: Device D, relationshipTypes: [COL, COW, COO, COT, COP]}
{Device B: Device G, relationshipTypes: [COO]}
{Device C: Device D, relationshipTypes: [COL, COW, COO, COT, COP]}
{Device C: Device G, relationshipTypes: [COO]}
{Device D: Device G, relationshipTypes: [COO]}

{Device E: Device F, relationshipTypes: [COO]}
{Device E: Device G, relationshipTypes: [COP]}
{Device F: Device G, relationshipTypes: [COL, COW, COT]}

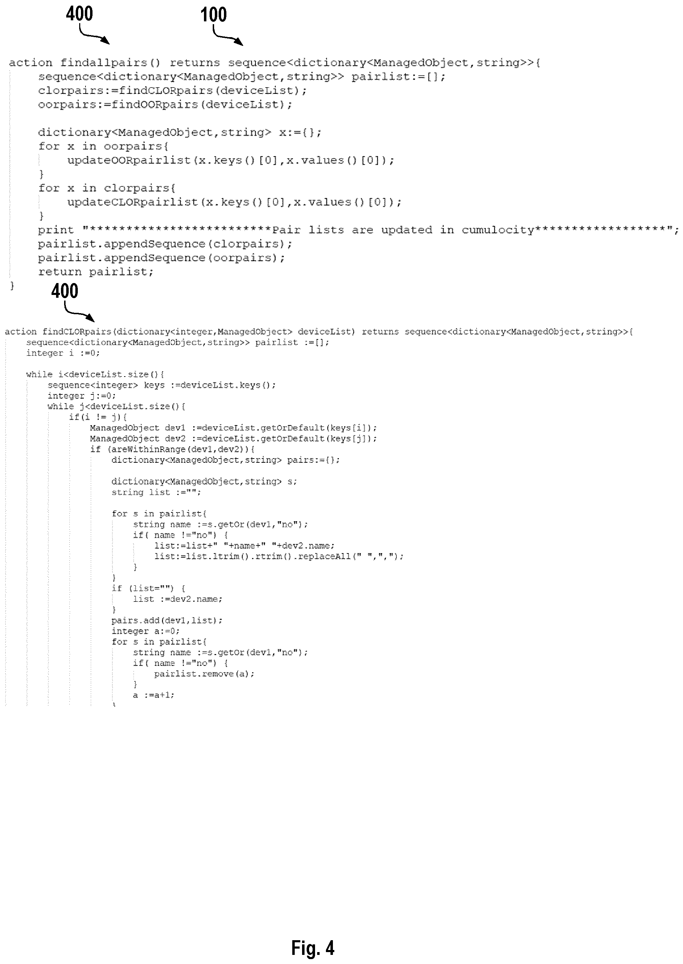

An exemplary proof of concept source code 400 for finding the pairs among the IoT devices A-G is shown in Fig. 4.

Fig. 3 shows a plurality of devices and their potential interconnections with an additional IoT device H. Thus, if a new IoT device H is onboarded onto the IoT platform, the IoT system may automatically pairs the new IoT device H with the already on-boarded / existing IoT devices A-G. Thus, as shown in Fig. 4, the new IoT device H is added to the IoT system. As an example, the properties of the new IoT device H may be given as below:

Device H- {type: type4, location: {80 lat ,-80 lng},work-assigned :washing,protocol:FieldBus, owner: Jolly }

Preferably, along with the existing set of pairs as shown above, new IoT device pairs may be formed. Examples are given in the following:

{Device E: Device H, relationshipTypes: [COW, COO]}
{Device F: Device H, relationshipTypes: [COO, COP]}

After having established a different new relationships between the new IoT device H and the other IoT devices A-G, the IoT system may determine how strongly certain IoT devices are paired, to offer a seamless service. In particular, IoT device pairs having the highest rank relationship may be considered as strong IoT device pairs.

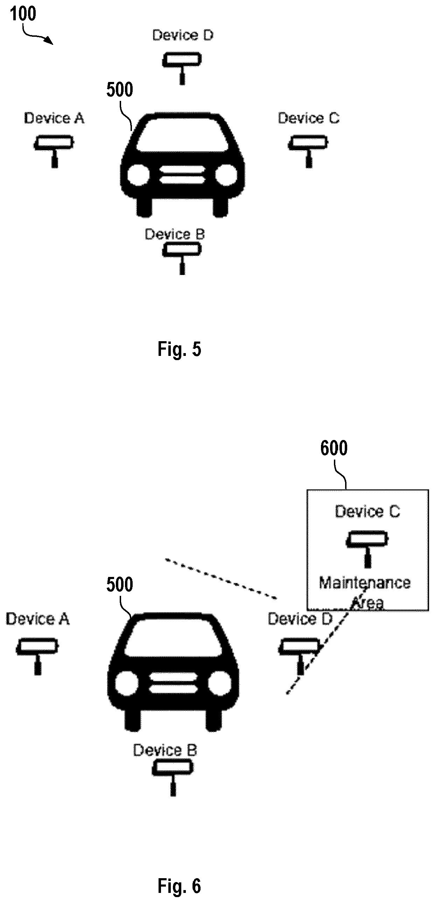

Fig. 5 shows a use case according to an aspect of the presented method for implementing a ranking system for social networking of Internet of Things (IoT) devices, specifically used for painting a car 500 by several robot IoT devices A-D. In this example, the IoT device selection is based only on a relationship type ranking and on a device work status. Thereby, it is considered that the IoT device A-D are paired to each other. In the presented use case, the IoT devices are painting robots. For example, it may be considered that only three devices A, B, C are assigned to paint the car 500, whereas the IoT device D remains un-assigned yet. According to the presented method, the status of these IoT devices A-C may be tracked, respectively, providing information like:

| Device A: | assigned, |
|---|---|
| Device B: | assigned, |
| Device C: | assigned, |
| Device D: | un-assigned |

By means of the prediction agent which can be deployed as a microservice in the IoT platform, it may be possible to upfront predict the status of the IoT devices A-D to determine if they can complete an assigned work, such as painting the car 500. This prediction agent may use an amount of work left, an amount of work a certain device A-D can do, an IoT device battery life etc. to decide whether the certain IoT device A-D may be able to finish the work/task or not. For example, if the prediction agent has predicted that the IoT device C would fail or may be likely to fail to complete the assigned work/task, according to the method, all device pairing comprising the IoT device C may be checked. This may be indicated as the following:

{Device A: Device C, relationshipTypes: [COL, COW, COO, COT, COP]}
{Device B: Device C, relationshipTypes: [COL, COW, COO, COT, COP]}
{Device C: Device D, relationshipTypes: [COL, COW, COO, COT, COP]}
{Device C: Device G, relationshipTypes: [COO]}

It has to be considered that COL, COW, COO, COT, COP indicate the different relationship types as already explained in detail above in the specification.

Preferably, the preferably weightage-based ranking system may be implemented to find the best match among the list of pairs for the IoT device C. In the provided example, said ranking may provide that the best match among the pairing is given by device D as it is unassigned and capable of completing the remaining work/task. Said best match is schematically shown in Fig. 6. Thus, an output of the preferably weightage-based ranking system may be that the best match to continue the service, to complete the work/task is device D. Thus, applying the presented method, the right pairing of IoT devices A-D was found. As a result, a certain IoT device D was found to substitute the IoT device C in order to complete the work/task originally designated to device C. Thus, as the IoT device C may have a malfunction, it may be moved to a maintenance area 600 and the selected IoT device D is used instead of the IoT device C in order to continue the painting task. Thereby, a seamless, uninterrupted painting work can be provided, in particular, by replacing malfunctioned IoT device C by the IoT device D.

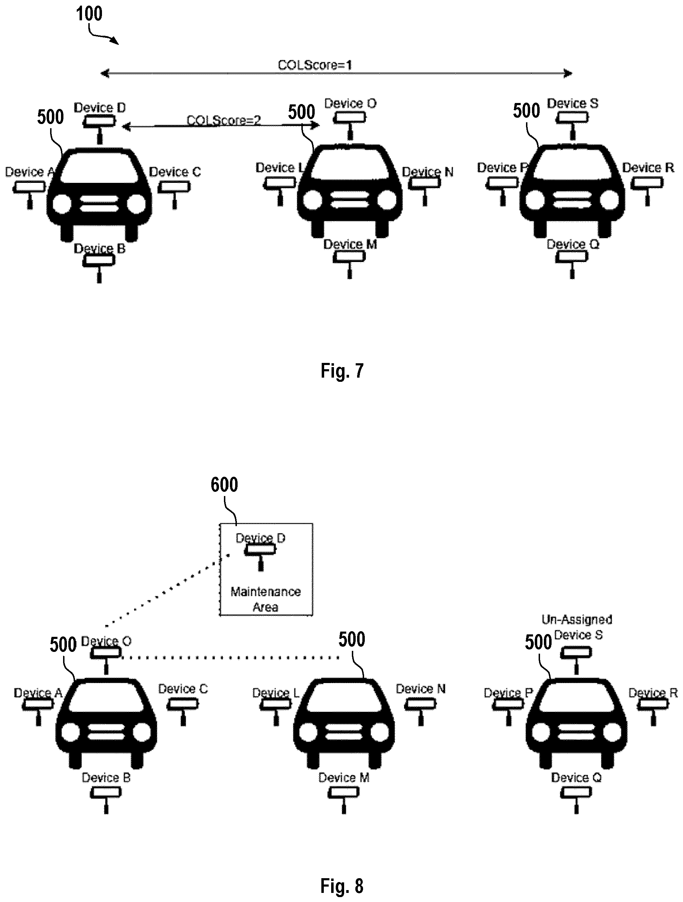

Fig. 7 shows an example of an IoT device selection based on relationship type ranking. In real world applications of the presented method, there could be many pairs having the same or similar matching criteria. In such a situation, COL scoring based on the COL relationship, deploying be a specific COL scoring engine, may be used to determine a certain IoT device among a plurality of IoT devices that is the nearest one to a malfunctioning or to be replaced IoT device. COL scoring may not be the only criteria, but other factors may be additionally or auxiliary considered to determine the right / correct / optimal IoT device for offering a seamless IoT service. For example, if the amount of work left before an IoT device is starting to malfunction is only small, a free or un-assigned IoT device may be determined based on the COL scoring. Thus, the IoT system may be configured for determining whether near-by IoT devices are free to take over the task/work of the malfunctioning IoT device so that it can finish the remaining amount of work left.

As an example, considering that the below set of IoT devices A-D are painting robots which are paired to each other by meaning of the COW-type relationship pairing, the presented method may be configured to determine the following device statuses:

|  |  |
|---|---|
| Device A: | assigned, |
| Device B: | assigned, |
| Device C: | assigned, |
| Device D: | assigned, |
| Device L: | assigned, |
| Device M: | assigned, |
| Device N: | assigned, |
| Device O: | un-assigned, |
| Device P: | assigned, |
| Device Q: | assigned, |
| Device R: | assigned, |
| Device S: | un-assigned, |

The prediction agent may be configured for predicting that a certain IoT device D may not be able to complete the task/work or may potentially fail with completing said task/work, the method may be applied for determining which one of the remaining IoT devices are paired or in pairing with the malfunctioning IoT device. The output may be as follows:

{Device A: Device D}
{Device B: Device D}
{Device C: Device D}
{Device D: Device G}
{Device D: Device L}
{Device D: Device M}
{Device D: Device N}
{Device D: Device O}
{Device D: Device P}
{Device D: Device Q}
{Device D: Device R}
{Device D: Device S}

Among the list of pairs including the malfunctioning IoT device D, the presented method may be configured for determining a highest ranking relationship type among these pairs. In this example, as the COW relationship type may be set of have the highest priority, the output may look like.

{Device A: Device D}
{Device B: Device D}
{Device C: Device D}
{Device D: Device L}
{Device D: Device M}
{Device D: Device N}
{Device D: Device O}
{Device D: Device P}
{Device D: Device Q}

{Device D: Device R}
{Device D: Device S}

Furthermore, according to the method, a weightage-based ranking system may be applied to determine which devices are un-assigned and thus be able to take over the task/work from IoT device D. The output may look like:

Device O:      un-assigned
Device S:      un-assigned

Thus, at this point of time, the method determined that there are two IoT devices O and S which can potentially take over the job of IoT device D and each of which are free for use. To select one IoT device among the two un-assigned IoT devices O, S, the method may be configured to determine which one of the two IoT devices O, S has the highest COL score. For example, if the COL score/rank for {Device D: Device O} = 2 and the COL score/rank for {Device D: Device S}= 1, the method may pick Device O to compensate the malfunction of IoT device D, as it is nearer according to COL score priority. Thus, as the IoT device D may have a malfunction, it may be moved to a maintenance area 600 (see Fig. 8) and the selected IoT device O is used instead of the IoT device D in order to continue the painting task. Thereby, a seamless, uninterrupted painting work can be provided, in particular, by replacing malfunctioned IoT device D by the IoT device O.

Still referring to Fig. 7 and 8, a further use case of the presented method may be given by a patch recommendation. Thereby, it may be considered that a user sets up a same ranking to all the relationship types and updates a patch on a device G. As device G is paired with Device A, B, C, D, F, it may send the patch update recommendation to all its pairs. On receiving a patch update recommendation, a user can accept or may configure respective auto-honor recommendation flag on those devices so that the patch gets installed automatically on those devices without any manual intervention.

The presented method may be used in an intelligent warehouse environment. In such an environment, IoT devices if form of robots may be configured to carry (empty) shelving units (also known as pods) to workstations of stowers. Such stowers may take products placed in front of them and fit them into open shelf space inside the shelving pods. When the pod is full, the stower may press a button that sends the robot and attached shelving unit rolling across a caged-in area of the warehouse, and eventually to the workstation of a "picker." These robots are subjected to wear and tear due to repetitive motion and working faster at lifting and handling products. Furthermore, the robot devices may be centrally managed by an IoT platform on which the presented method is performed. The robot IoT devices may be continuously evaluated in view of their respective performance. By deploying the presented prediction agent, it is possible to determine if a robot IoT device may go to halt, for example, caused by at least one of worn ball bearings, worn gear teeth, worn tire treads and a too-thick or too-thin lubricant viscosity of the robot IoT device, etc. Once a prediction agent output is received, the preferably weightage based ranking system may find the nearest best match among the robot IoT devices to replace the malfunctioning robot IoT device for business continuity.

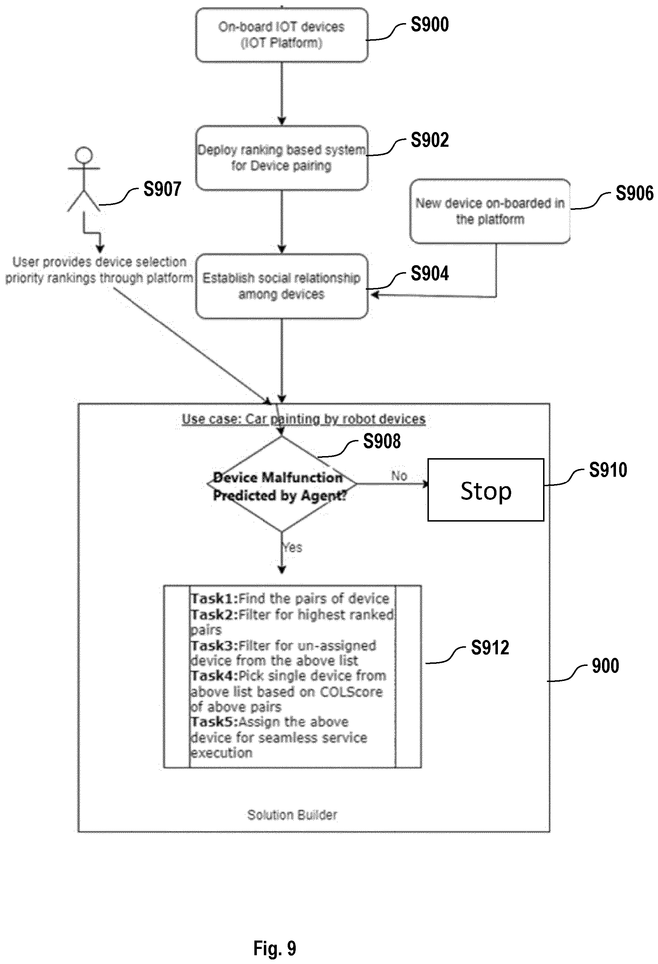

Fig. 9 considers an example of a flowchart of the presented method according to one aspect. On the IoT platform, there may be provided several on-boarded IoT devices, indicated by step S900. In step S902, the ranking based system may be deployed for performing device pairing. In step S904, the method may establish a social relationship among the IoT devices. Optionally, there may be new IoT devices that shall be on-boarded in the IoT platform, as indicated by step S906. Also, a user may provide device selection priority rankings via the IoT platform, especially in form of priority criteria. This is indicated by step S907. In a solution builder 900, the predication agent may be applied for determining a malfunctioning device, as indicated by step S908. If no malfunctioning device is detected, the method stops, as indicated by step S910. If a malfunctioning device is detected / determined, the method may perform different tasks, as listed in step S912. Among these tasks, there may be as examples but not exclusively, finding the pairs of the IoT devices, filtering for the highest ranked pairs, filtering for un-assigned IoT devices, picking a single IoT device based on at least one ranking criterion, and assigning the picked IoT device for seamless service execution.

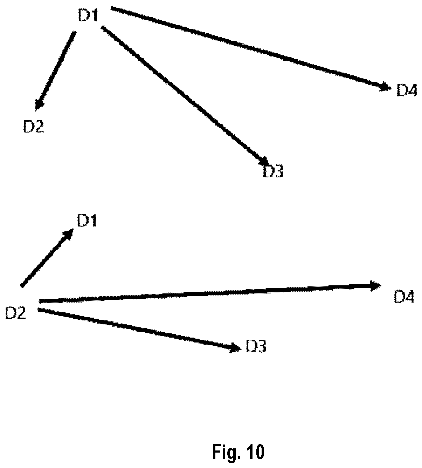

Referring now to Fig. 10, the preferred weightage-based system to dynamically find the best match among the IoT devices is explained in detail. Thereby, a detailed overview of the weightage-based system is provided that dynamically finds the best match when a prediction agent predicts a device going to be malfunctioned. As shown in Fig. 10, an acyclic graph m of IoT devices may be drawn, in which IoT devices form nodes. m is the number of devices (j = 1... m). Next, a distance between two nodes may be determined to get the proximity of the respective two IoT devices. Furthermore, weights w may be assigned to each of the criterions/attributes, wherein n may be the number of criterions/attributes. (i=1... n). Criterions and their respective weight may be provided as shown in the below table. The table may be derived for D1 and D2 and similarly system will derive for other set of devices.

Example:

| Attributes | Weights |
|---|---|
| Proximity | 3 |
| Availability | 1 |
| Replacement factor | 1 |
| Relationship - COT | 1 |
| Relationship - COW | 1 |
| Relationship - COP | 1 |
| Relationship - COO | 1 |

It is to be noted that weights w for different attributes between two devices are calculated as below presented.

Proximity: Weights for proximity attribute is assigned between 1 to n-1.

The closer the IoT device, the higher the proximity weightage.

Availability: If an IoT device is unassigned or will be free by the time other device goes down, its weightage is set 1, else 0.

Replacement factor: Replacement quotient is calculated as below:

Remaining Useful Life > Amount of work pending =1
Remaining Useful Life < Amount of work pending = 0

COT-relationship: If two IoT devices have a COT relationship type between each other, the weightage is 1, else 0.

COW-relationship: If two IoT devices have COT relationship type between each other, the weightage is 1, else 0.

COP-relationship: If two IoT devices have COT relationship type between each other then the weightage is 1, else 0.

COO-relationship: If two IoT devices have COT relationship type between each other then the weightage is 1, else 0.

Based on the above, a weightage matrix can be derived. Each entry in the matrix is calculated as follows:

$$\sum_{i=1}^{n} \log(w_{jj})$$

For each device pairs, all the above-indicated attribute weights are summed and a log of each is taken to arrive at a weightage matrix, exemplarily looking like:

|    | D1 | D2 | D3 |
|----|------|------|------|
| D1 | 0 | 1.23 | 0.72 |
| D2 | 0.68 | 0 | 1.05 |
| D3 | 1.57 | 0.68 | 0 |

It is to be noted that Dij may be replaceable with Dij (ij≠ij) satisfying the condition Dij > Dij for i=1....n and j=1....m.

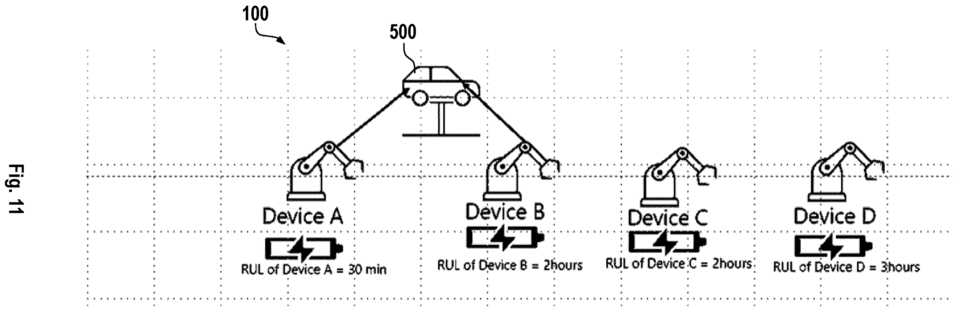

A workflow of the ranking based system may also and/or additionally be explained by the following steps: As the method refers to a centrally managed IoT ecosystem, all onboarded devices may be centrally managed by a platform and continuously evaluated for the performance of the devices. With the presented method, there is provided one monitoring and prediction agent which determines if an IoT device may go to halt and/or has a malfunction. This may be done by calculating the remaining useful life of the respective IoT devices A-D and by calculating the work left for completing an assigned task, see Fig. 11. Once the remaining useful life (RUL) of the IoT device is identified and if it is less than work left, necessary action can be taken that could be replacement of device ahead of time. As an example, it is assumed that in an industry environment, two out of four IoT devices-based robots, denoted by Device A, Device B, Device C and Device D, are continuously painting the car 500, as indicated in Fig. 11. Using the RUL calculation, it may be identified that RUL(device A)= 30 mins, RUL(device B)= 2 hours, RUL(device C)= 2 hours and RUL(device D)= 3 hours. For example, if RUL of the device A is less than the work left, for example 2 hours, device A may have to be replaced with another suitable device B-D (also named as target device). In this scenario device C may be selected as target device. The target device is selected from the devices which has social relation with the current device Relationship-COT, Relationship-COW, Relationship-COP, Relationship-COO and it is selected based on the rank of the relationship type and attributes such as proximity, availability, RLTL of those devices, work left for those devices. Now using the ranking based approach, weights of all the attributes (proximity, availability, replaceability, relationship-COT, relationship-COW, relationship-COP, relationship-COO) of the device is calculated. Then, a certain target device is selected for offering the service. Once the target device the identified, an agreement is set between the source and the target device so that the source can be replaced by the target before it stops working so that there is continuation of the job.

LIST OF REFERENCE SIGNS

| | |
|---|---|
| 100 | device |
| 102 | processing unit |
| 104 | memory unit |
| 400 | proof of concept source code |
| 500 | car |
| 600 | maintenance area |
| 900 | solution builder |
| D1 | IoT device |
| D2 | IoT device |
| D3 | IoT device |
| D4 | IoT device |
| A | IoT device |
| B | IoT device |
| C | IoT device |
| D | IoT device |
| E | IoT device |
| F | IoT device |
| G | IoT device |
| H | IoT device |
| L | IoT device |
| M | IoT device |
| m | number of IoT devices |
| N | IoT device |
| n | number of criterions/attributes |
| O | IoT device |
| P | IoT device |
| Q | IoT device |
| R | IoT device |
| S | IoT device |
| w | weights |
| S1 | method step |
| S2 | method step |
| S3 | method step |
| S4 | method step |
| S5 | method step |
| S6 | method step |
| S900 | method step |
| S902 | method step |
| S904 | method step |
| S906 | method step |
| S907 | method step |
| S908 | method step |
| S910 | method step |
| S912 | method step |

**Claims**

**1.** A method for implementing a ranking system for social networking of Internet of Things (IoT) devices, the method comprising:

a. deploying (S1) a prediction agent in an IoT platform of the ranking system;
b. predicting (S2), by the prediction agent, a status of at least one IoT device to evaluate a capability of the at least one IoT device to complete an assigned task;
c. applying (S3) the ranking system to determine other IoT devices for replacement of the at least one capability-predicted IoT device based on at least one ranking criterion; and
d. selecting (S4) one of the other IoT devices for connection with the at least one capability-predicted IoT device to complete the assigned task of the capability-predicted IoT device.

2. The method of claim 1, wherein the at least one ranking criterion defines one or more relationship types selected from the group comprising a co-location relationship, a co-owner relationship, a co-work relationship, a co-type relationship, and a co-protocol relationship.

3. The method of claim 1 or 2, further comprising prioritizing (S5) the at least one ranking criterion based on at least one priority criterion, wherein the priority criterion is dynamically adjustable within the ranking system in accordance with at least one of a connection context, a connection situation and a connection solution.

4. The method of claim 3, further comprising enabling a solution builder to dynamically adjust the at least one priority criterion and/or a priority within the ranking system.

5. The method of claim 2, wherein the co-location relationship is defined based on a geographical distance threshold.

6. The method of claim 2, wherein the co-owner relationship is established when the IoT devices have the same owner.

7. The method of claim 2, wherein the co-work relationship is established when the IoT devices are assigned to the same task.

8. The method of claim 2, wherein the co-type relationship is established when the IoT devices are of the same type or brand.

9. The method of claim 2, wherein the co-protocol relationship is established when the IoT devices communicate using the same protocol.

10. The method of any one of the preceding claims, further comprising dynamically adjusting (S6) at least one weightage of the weightage-based ranking system changing and/or recalculating and/or resetting the at least one weightage of the at least one ranking criterion based on a predefined weightage set criterion, wherein the weightage-based ranking system comprises a weightage matrix, in which for each pair of determined IoT devices the weightages for the ranking criteria are summed.

11. A device (100) for implementing a ranking system for social networking of Internet of Things (IoT) devices, the device (100) comprising:

a processing unit (102); and
a memory unit (104); wherein the processing unit (102) is configured to execute instructions stored in the memory unit (104) to perform the method of any one of claims 1-10.

12. The device of claim 11, wherein the processing unit (102) further executes instructions to facilitate the preferably weightage-based ranking system to determine a replacement for an IoT device based on multiple relationship types.

13. The device of claim 11 or 12, wherein the processing unit (102) further executes instructions to dynamically alter the weightage-based ranking system, prioritizing different IoT devices based on current conditions and defined relationship types.

14. A computer program comprising program code for executing at least parts of a method according to any one of claims 1 to 10, when the computer program is executed on a computer.

15. A computer-readable data carrier with program code of a computer program for executing at least parts of a method according to one of claims 1 to 10, when the computer program is executed on a computer.

Fig. 1

100

Device D

Device A

Device C

Device G

Device B

Device F

Device E

**Fig. 2**

Device H

100

Device D

Device A

Device C

Device G

Device B

Device F

Device E

**Fig. 3**

**400** **100**

```
action findallpairs() returns sequence<dictionary<ManagedObject,string>>{
    sequence<dictionary<ManagedObject,string>> pairlist:=[];
    clorpairs:=findCLORpairs(deviceList);
    oorpairs:=findOORpairs(deviceList);

    dictionary<ManagedObject,string> x:={};
    for x in oorpairs{
        updateOORpairlist(x.keys()[0],x.values()[0]);
    }
    for x in clorpairs{
        updateCLORpairlist(x.keys()[0],x.values()[0]);
    }
    print "************************Pair lists are updated in cumulocity******************";
    pairlist.appendSequence(clorpairs);
    pairlist.appendSequence(oorpairs);
    return pairlist;
}
```

**400**

```
action findCLORpairs(dictionary<integer,ManagedObject> deviceList) returns sequence<dictionary<ManagedObject,string>>{
    sequence<dictionary<ManagedObject,string>> pairlist :=[];
    integer i :=0;

    while i<deviceList.size(){
        sequence<integer> keys :=deviceList.keys();
        integer j:=0;
        while j<deviceList.size(){
            if(i != j){
                ManagedObject dev1 :=deviceList.getOrDefault(keys[i]);
                ManagedObject dev2 :=deviceList.getOrDefault(keys[j]);
                if (areWithinRange(dev1,dev2)){
                    dictionary<ManagedObject,string> pairs:={};

                    dictionary<ManagedObject,string> s;
                    string list :="";

                    for s in pairlist{
                        string name :=s.getOr(dev1,"no");
                        if( name !="no") {
                            list:=list+" "+name+" "+dev2.name;
                            list:=list.ltrim().rtrim().replaceAll(" ",",");
                        }
                    }
                    if (list="") {
                        list :=dev2.name;
                    }
                    pairs.add(dev1,list);
                    integer a:=0;
                    for s in pairlist{
                        string name :=s.getOr(dev1,"no");
                        if( name !="no") {
                            pairlist.remove(a);
                        }
                        a :=a+1;
```

**Fig. 4**

100

Device D

500

Device A

Device C

Device B

Fig. 5

600

Device C

500

Maintenance Area

Device A

Device D

Device B

Fig. 6

100

COLScore=1

Device D

500

Device A                    Device C

Device B

COLScore=2

500

Device O

Device L                    Device N

Device M

Device S

500

Device P                    Device R

Device Q

Fig. 7

600

Device D

Maintenance
Area

500   Device O

Device A                    Device C

Device B

500

Device L                    Device N

Device M

Un-Assigned
500   Device S

Device P                    Device R

Device Q

Fig. 8

EP 4 575 946 A1

On-board IOT devices
(IOT Platform) — S900

Deploy ranking based system
for Device pairing — S902

New device on-boarded in
the platform — S906

S907

User provides device selection
priority rankings through platform

Establish social relationship
among devices — S904

Use case: Car painting by robot devices

Device Malfunction
Predicted by Agent? — S908

No → Stop — S910

Yes

**Task1:** Find the pairs of device
**Task2:** Filter for highest ranked pairs
**Task3:** Filter for un-assigned device from the above list
**Task4:** Pick single device from above list based on COLScore of above pairs
**Task5:** Assign the above device for seamless service execution — S912

900

Solution Builder

Fig. 9

19

Fig. 10

Fig. 11

Device A
RUL of Device A = 30 min

Device B
RUL of Device B = 2hours

Device C
RUL of Device C = 2hours

Device D
RUL of Device D = 3hours

## EUROPEAN SEARCH REPORT

**Application Number**

EP 23 21 8280

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/050494 A1 (BARTFAI-WALCOTT KATALIN [US] ET AL) 13 February 2020 (2020-02-13) * paragraphs [0068] – [0086], [0113], [0158] – [0183] * | 1-15 | INV. G06Q10/0631 G06F9/50 H04L61/00 H04L67/12 |
| X | US 2022/405149 A1 (GROSS TYLER [US] ET AL) 22 December 2022 (2022-12-22) * paragraphs [0012] – [0030], [0037] – [0048], [0063] – [0102] * | 1,11,14, 15 | H04W4/02 G06F11/34 |
| A | CN 112 866 358 A (UNIV CHINA GEOSCIENCES BEIJING) 28 May 2021 (2021-05-28) * paragraphs [0091], [0095] * | 2,5 | |
| A | US 2020/267045 A1 (DEFIEBRE DANIEL [DE] ET AL) 20 August 2020 (2020-08-20) * paragraph [0077] * | 5,7,8 | |
| A | CN 114 385 359 A (CHONGQING POST AND TELECOMMUNICATION UNIV) 22 April 2022 (2022-04-22) * paragraph [0076] * | 1,2,5-8, 11,14,15 | TECHNICAL FIELDS SEARCHED (IPC) |
| A | US 2023/130503 A1 (DESHPANDE PRAMOD KUMAR [IN] ET AL) 27 April 2023 (2023-04-27) * paragraphs [0050], [0055], [0056] * | 3,4,10, 11 | G06Q G06F H04W H04L |
| A | US 2019/180218 A1 (VIGNESWARAN EINTHUSAN [CA]) 13 June 2019 (2019-06-13) * paragraph [0180] * | 10-12 | |

The present search report has been drawn up for all claims

| Place of search | Date of completion of the search | Examiner |
|---|---|---|
| Munich | 3 April 2024 | Hopper, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8280

03-04-2024

| Patent document cited in search report | | Publication date | Patent family member(s) | | Publication date |
|---|---|---|---|---|---|
| US 2020050494 | A1 | 13-02-2020 | DE 112017006994 | T5 | 17-10-2019 |
| | | | US 2020050494 | A1 | 13-02-2020 |
| | | | US 2022318066 | A1 | 06-10-2022 |
| | | | US 2023409407 | A1 | 21-12-2023 |
| | | | WO 2018144060 | A1 | 09-08-2018 |
| US 2022405149 | A1 | 22-12-2022 | EP 4352617 | A1 | 17-04-2024 |
| | | | US 2022405149 | A1 | 22-12-2022 |
| | | | WO 2022261652 | A1 | 15-12-2022 |
| CN 112866358 | A | 28-05-2021 | NONE | | |
| US 2020267045 | A1 | 20-08-2020 | NONE | | |
| CN 114385359 | A | 22-04-2022 | NONE | | |
| US 2023130503 | A1 | 27-04-2023 | NONE | | |
| US 2019180218 | A1 | 13-06-2019 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BUTT et al.** *Social Internet of Vehicles: Architecture and Enabling Technologies*

- **KHELLOUFI et al.** *A Social Relationships Based Service Recommendation System For SIoT Devices*